# EUROPEAN PATENT APPLICATION

(11) **EP 4 738 226 A1**
(43) Date of publication of application: **06.05.2026**
(21) Application number: 25209047.7
(22) Date of filing: 16.10.2025
(51) Int. Cl.: G06Q 30/0251, G06Q 30/0241, G06Q 30/0601

(54) **PREDICTIVE RECOMMENDATION GENERATION**

(30) Priority: 31.10.2024 US 202418933788
(71) Applicant: eBay Inc., San Jose, CA 95125 (US)
(72) Inventor: NI, Kaichen, San Jose, 95125 (US); QIN, Rou, San Jose, 95125 (US); SHEN, YiZhou, San Jose, 95125 (US); YU, He, San Jose, 95125 (US); ZHOU, Lu, San Jose, 95125 (US)
(74) Representative: Müller-Boré & Partner Patentanwälte PartG mbB

(57) **Abstract**

In implementations of systems and procedures for a service provider system, a computing device implements predictive recommendation generation. A registration component is employed to register a specific interaction sequence defining an order of user interactions to be performed by a single user during a session on a platform. The specific interaction sequence is predicted to proceed to a request for a recommendation result by the single user. Additionally, an interaction monitor is configured to monitor, in real-time, interaction sequences of a plurality of users. In response to detecting the specific interaction sequence for a user of the plurality of users, the interaction monitor triggers, in real-time, pre-calculation of the recommendation result for the user, and a cache stores the pre-calculated recommendation result.

## Description

### BACKGROUND

Computing devices implementing platforms that support item listings, such as electronic commerce platforms, can experience different amounts of computational load during different conditions. Some interactions between users and platforms can lead to higher computational loads than other interactions. Interactions associated with higher computational loads can result in consumption of shared resources, such as memory and processing power, that are also used for other tasks. During conditions in which high computational load interactions occur, the consumption of shared resources can lead to increased latency associated with performing other tasks. Additionally, interactions causing high computational loads can take more time to complete than interactions associated with lower computational loads.

### SUMMARY

Techniques for predictive recommendation generation are described. In one or more implementations, a system includes a registration component to register a specific interaction sequence defining an order of user interactions to be performed by a single user during a session on a platform. The specific interaction sequence is predicted to proceed to a request for a recommendation result by the single user. Additionally, an interaction monitor is configured to monitor, in real-time, interaction sequences of a plurality of users. In response to detecting the specific interaction sequence for a user of the plurality of users, the interaction monitor triggers, in real-time, pre-calculation of the recommendation result for the user, and a cache stores the pre-calculated recommendation result.

This Summary introduces a selection of concepts in a simplified form that are further described below in the Detailed Description. As such, this Summary is not intended to identify essential features of the claimed subject matter, nor is it intended to be used as an aid in determining the scope of the claimed subject matter.

### BRIEF DESCRIPTION OF THE DRAWINGS

The detailed description is described with reference to the accompanying figures. Entities represented in the figures are indicative of one or more entities and thus reference is made interchangeably to single or plural forms of the entities in the discussion.
FIG. 1 is an illustration of an environment in an example implementation that is operable to employ predictive recommendation generation as described herein.
FIG. 2 depicts an example implementation showing operation of a registration module and interaction monitor of a service provider system.
FIG. 3 depicts an example implementation showing operation of a pre-calculation module configured to generate a recommendation and store the recommendation to a cache.
FIG. 4 depicts an example implementation showing operation of the interaction monitor to detect a trigger and provide the recommendation responsive to the trigger.
FIG. 5 is an illustration of another environment in an example implementation that is operable to employ predictive recommendation generation as described herein.
FIG. 6 is an illustration depicting data sources for predictive recommendation generation.
FIG. 7 is an illustration of a graphical user interface employed for registration of an interaction sequence for predictive recommendation generation.
FIG. 8 shows a flow diagram depicting a procedure in an example implementation which includes predictive recommendation generation.
FIG. 9 shows a flow diagram depicting a procedure in an example implementation which includes a recommendation pre-calculated via predictive recommendation generation.
FIG. 10 illustrates an example system that includes an example computing device that is representative of one or more computing systems and/or devices for implementing the various techniques described herein.

### DETAILED DESCRIPTION

### Overview

Service provider systems implement platforms supporting item listings, such as electronic commerce platforms. In some situations, such platforms are configured to provide recommendations to users. Recommendations may include, for example, advertisements for products and/or services, suggestions for increasing views and visibility of item listings on the platform, or indications of item listings similar to those associated with a particular viewer.

In order to provide recommendations, service provider systems implementing such platforms may perform various calculations associated with generating the recommendations. Such calculations may be computationally intensive and may involve prolonged calculation times and/or consumption of resources of a service provider system that are also used for performing other operations. For example, resources such as memory and processor load may be used by the service provider system to perform calculations for generating recommendations as well as to perform operations to maintain a stability and network connectivity of the service provider system.

In some conventional approaches, computationally intensive calculations, such as calculations used to generate recommendations for users, are performed on-demand responsive to user input. For example, a user may input a request for a recommendation for keywords to include in an item listing to increase a likelihood that the item listing is located by other users on the platform. However, performing such calculations on-demand may cause latency and reduce a responsiveness of the platform while the calculations are being performed, which may lead to user frustration, timeouts, and/or undesired loss of network connectivity to the platform.

Other conventional approaches attempt to reduce the computational burden on a service provider system associated with on-demand requests involving computationally intensive calculations by performing all potential calculations for all users of the platform at regularly scheduled intervals. For example, a service provider system may generate respective recommendations for all users of the platform once per day, and the recommendations may be provided to the users upon request (e.g., responsive to user input to request recommendations).

However, while such approaches can reduce an amount of time elapsing between a moment at which a user requests a recommendation and a moment at which the recommendation is provided to the user, such approaches can also lead to increased data storage consumption of the service provider system. It is not uncommon for platforms to have millions of registered users, and storing the recommendations for all of the users can consume an enormous amount of data storage space available to the service provider systems implementing the platforms. Thus, it may be difficult or impossible to accommodate such data storage consumption without substantially increasing the available data storage space through additional data storage hardware which can be impractical and expensive. Additionally, although the recommendations are generated for all users of the platform, it is highly likely that a large amount of users will not use or request the recommendations generated for them. This results in wasteful consumption of resources to generate the unused and unrequested recommendations, as well as wasteful consumption of data storage space to store such recommendations.

To address the above-described technical challenges, the techniques described herein employ predictive recommendation generation to pre-calculate recommendations for users in a predictive manner based on interactions of the users with the platform. According to the described techniques, a specific sequence of interactions that may be performed by users of the platform is registered with the service provider system implementing the platform. The registered interaction sequence is communicated to an interaction monitor employed by the service provider system to monitor interactions between a plurality of users and the platform. The interaction monitor compares interactions performed by the users with the interactions included in the registered interaction sequence. Responsive to detecting that a user has performed interactions during a session on the platform that match the interactions described by the registered interaction sequence, the service provider system pre-calculates one or more recommendations for that user and stores the one or more recommendations in a cache. The interaction monitor monitors the interactions of the user for a trigger, and responsive to detecting that a trigger has occurred, the platform provides the one or more recommendations to the user.

In this way, the recommendations are pre-calculated for users that are predicted to proceed to request the recommendations based on the interactions of the users with the platform. This reduces a consumption of resources of the service provider system relative to conventional approaches by generating the recommendations for users that are likely to use or request such recommendations while refraining from generating recommendations for users that are unlikely to use such recommendations. Further, because the recommendations are pre-calculated for the users, the service provider system is able to provide the recommendations to the users immediately upon detection of a trigger (e.g., a request for the recommendations) without latency associated with performing the calculations for generation of the recommendations. Thus, a performance of the service provider system is increased without additional hardware such as additional data storage, and ease of use of the platform is increased.

The systems, devices, and techniques described herein provide several technical advantages for predictive recommendation generation in computing systems. By registering specific interaction sequences and monitoring user interactions in real-time, the system may predict when a user is likely to request a recommendation and pre-calculate that recommendation proactively. This pre-calculation approach may reduce latency when the user actually requests the recommendation, as it can be quickly retrieved from cache rather than calculated on-demand.

The system may also optimize resource utilization by selectively pre-calculating recommendations only for users predicted to need them based on their interaction patterns. This targeted approach may avoid unnecessary calculations and storage for users unlikely to request recommendations. Additionally, the use of machine learning models to generate recommendations allows the system to leverage user data and interaction history to provide more relevant and personalized recommendations.

The caching mechanism enables efficient storage and retrieval of pre-calculated recommendations, while the indexing allows recommendations to be associated with specific users or entity levels. This architecture supports scalability as the number of users and interactions grows. The real-time monitoring and trigger detection also allows the system to provide timely recommendations aligned with the user's current context and actions on the platform.

Overall, these techniques may enhance the user experience by providing faster, more relevant recommendations while optimizing system performance and resource utilization. The flexible, modular design also allows the system to be adapted for different platforms and use cases.

In the following discussion, an exemplary environment is first described that may employ the techniques described herein. Examples of implementation details and procedures are then described which may be performed in the exemplary environment as well as other environments. Performance of the exemplary procedures is not limited to the exemplary environment and the exemplary environment is not limited to performance of the exemplary procedures.

In some aspects, the techniques described herein relate to a system, including: a registration component to register a specific interaction sequence defining an order of user interactions to be performed by a single user during a session on a platform, the specific interaction sequence predicted to proceed to a request for a recommendation for the single user; an interaction monitor to: monitor, in real-time, interaction sequences of a plurality of users; and in response to detecting the specific interaction sequence for a user of the plurality of users, performing, in real-time, pre-calculation of the recommendation for the single user; and a cache to store the pre-calculated recommendation.

In some aspects, the techniques described herein relate to a system, further including a domain service to: retrieve the pre-calculated recommendation from the cache in response to the single user requesting the recommendation; and output the pre-calculated recommendation.

In some aspects, the techniques described herein relate to a system, wherein the cache is configured to store the recommendation indexed to an entity level specified by the domain service.

In some aspects, the techniques described herein relate to a system, further including a machine-learning model to pre-calculate the recommendation.

In some aspects, the techniques described herein relate to a system, wherein the interaction monitor selects data for the machine-learning model to use for pre-calculating the recommendation based on the single user and the specific interaction sequence.

In some aspects, the techniques described herein relate to a system, wherein the platform supports a plurality of item listings, and a content of the recommendation is determined based on one or more of the item listings associated with the single user.

In some aspects, the techniques described herein relate to a system, wherein the content of the recommendation includes one or more promotions redeemable on the platform.

In some aspects, the techniques described herein relate to a method implemented by a computing device, including: receiving, by the computing device, input specifying a registered interaction sequence, the registered interaction sequence defining interactions performable in a specified order during a user session on a platform; monitoring, by the computing device in real-time, interaction sequences performed by users of the platform; responsive to determining, by the computing device, that one of the interaction sequences performed by one of the users includes each of the interactions of the registered interaction sequence in the specified order, immediately generating a recommendation associated with the user and storing the recommendation to a cache.

In some aspects, the techniques described herein relate to a method, further including: responsive to detecting, via the computing device, that a trigger has occurred, retrieving the recommendation from the cache and outputting the recommendation to the user.

In some aspects, the techniques described herein relate to a method, wherein storing the recommendation to the cache includes associating the recommendation in the cache with the user via an index in the cache.

In some aspects, the techniques described herein relate to a method, wherein generating the recommendation associated with the user is performed via a machine-learning model.

In some aspects, the techniques described herein relate to a method, further including selecting data for the machine-learning model to use for generating the recommendation associated with the user based on data describing attributes of the user and the registered interaction sequence.

In some aspects, the techniques described herein relate to a method, further including: monitoring, by the computing device in real-time, interactions of the user with the platform; detecting, by the computing device, a trigger from the interactions; and responsive to detecting the trigger, retrieving, by the computing device, the recommendation from the cache and outputting the recommendation to a user device via the platform.

In some aspects, the techniques described herein relate to a method, further including: monitoring, by the computing device in real-time, interactions of the user with the platform; determining, by the computing device, whether a trigger is present in the monitored interactions within a duration; and responsive to determining that the trigger is not present in the monitored interactions within the duration, discarding the recommendation from the cache.

In some aspects, the techniques described herein relate to one or more non-transitory computer-readable storage media storing instructions thereon which, when executed by one or more computing devices, cause the one or more computing devices to perform operations including: receiving, by the computing device, input to register a specific interaction sequence defining an order of user interactions to be performed by a single user during a session on a platform; monitoring, by the computing device in real-time, interaction sequences of a plurality of users; responsive to detecting the specific interaction sequence for a user of the plurality of users, performing, by the computing device in real-time, pre-calculation of a recommendation for the user; storing, by the computing device, the pre-calculated recommendation to a cache.

In some aspects, the techniques described herein relate to one or more non-transitory computer-readable storage media, wherein the instructions further include: retrieving the pre-calculated recommendation from the cache in response to the single user requesting the recommendation; and outputting the pre-calculated recommendation.

In some aspects, the techniques described herein relate to one or more non-transitory computer-readable storage media, wherein the instructions further include: associating the recommendation in the cache with the single user via an index of the cache.

In some aspects, the techniques described herein relate to one or more non-transitory computer-readable storage media, wherein the instructions further include: performing the pre-calculation of the recommendation for the user using a machine-learning model.

In some aspects, the techniques described herein relate to one or more non-transitory computer-readable storage media, wherein the instructions further include: selecting data for the machine-learning model to use for pre-calculating the recommendation based on the single user and the specific interaction sequence.

In some aspects, the techniques described herein relate to one or more non-transitory computer-readable storage media, wherein the instructions further include: determining a content of the recommendation based on the platform.

### Example of an Environment

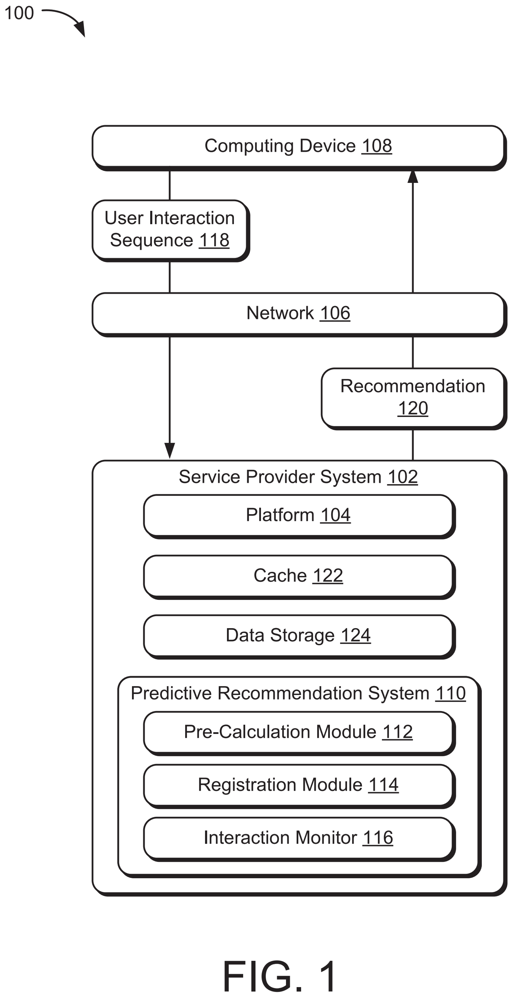

FIG. 1 is an illustration of an environment 100 in an example implementation that is operable to employ techniques for predictive recommendation generation as described herein. In the depicted environment 100, a service provider system 102 implements a platform 104. The platform 104 includes item listings browsable by users. For example, the item listings are viewable at devices external to the service provider system 102 through communication with the service provider system 102 over a network 106 (e.g., the internet, a subscriber network such as a cellular or Wi-Fi network, etc.). For example, a computing device 108 may communicate electronically with the service provider system 102 with each other over the network 106. The computing device 108 may be implemented as a personal computer, laptop, tablet, smartphone, or other type of computing device.

The service provider system 102 supports creation of item listings and management of item listings on the platform 104. In some implementations, the item listings are implemented by the platform 104 as separate webpages (e.g., each item listing may be viewed as a webpage that is separate from other item listings) and/or sections of a digital application (e.g., an application for a smartphone, tablet, personal computer, etc.), and the service provider system 102 may implement the platform 104 as a website.

The platform 104 may include various different features such as a user login section, a search and/or browsing section for item listings, a respective section for each item listing, etc. The various sections may be implemented as webpages in some instances. In other implementations, the various sections may be sections of an application (e.g., a smartphone application).

The service provider system 102 includes a predictive recommendation system 110 including a pre-calculation module 112 configured to generate recommendations to be communicated to user devices (e.g., the computing device 108) responsive to interactions between the user devices and the service provider system 102. To do so, the pre-calculation module communicates electronically with a registration module 114 and an interaction monitor 116. Example operations performed by the registration module 114 and the interaction monitor 116 are described further below. Each of the pre-calculation module 112, the registration module 114, and the interaction monitor 116 is implemented in hardware and/or software of the service provider system 102.

The registration module 114 (which may also be referred to herein as a registration component) receives input specifying various interactions that may occur during a session of a user device (e.g., the computing device 108) on the platform 104. The registration module 114 registers a specific interaction sequence defining an order of interactions, such as user interactions, that may be performed by a single user during a session on the platform 104 implemented by the service provider system 102. The specific interaction sequence is an interaction sequence that, when performed by a user, is indicative of a high likelihood that a subsequent interaction involving the user will include a request from the user for a recommendation from the service provider system 102. For example, the specific interaction sequence may include a first interaction corresponding to input of login credentials of the user to the platform 104, a second interaction corresponding to navigation of the device of the user (e.g., computing device 108) to an item listing management section of the platform 104, and a third interaction corresponding to navigation of the device of the user to an item listing creation section of the platform 104. Subsequent to occurrence of this interaction sequence, the user is predicted to have a high likelihood to proceed to request one or more recommendations from the service provider system 102 via the platform 104, such as recommendations for item listing keywords, recommendations for digital images to be included in an item listing, recommendations for promotions to be used for the item listing, etc.

The interaction monitor 116 is employed by the service provider system 102 to monitor, in real-time, interaction sequences of a plurality of users interacting with the platform 104. In particular, the interaction monitor 116 monitors interactions associated with users (e.g., interactions between the users and the platform 104, such as inputting data, navigating to particular sections, etc.) and determines, for any given user, whether that user has performed interactions that match interactions described by the specific interaction sequence described above. The interactions of the user are depicted as a user interaction sequence 118. In response to detecting that a user has performed the specific interaction sequence, the interaction monitor 116 triggers, in real-time, pre-calculation of one or more recommendations for that user, e.g., recommendation 120.

The service provider system 102 further includes a cache 122 which is employed by the service provider system 102 to store the pre-calculated recommendations (which may also be referred to herein as recommendation results). The cache 122 may include volatile memory, examples of which include random access memory (RAM), static random access memory (SRAM), dynamic random access memory (DRAM), synchronous dynamic random-access memory (SDRAM), latch arrays, and embedded DRAM (eDRAM). Additionally or alternatively, the cache 122 may correspond to or include non-volatile memory, such as phase change memory (PCM), spin-transfer torque magneto-resistive RAM (STT-MRAM), ferroelectric RAM (FeRAM), and so on. In some implementations the cache 122 may be implemented as part of a data storage 124 of the service provider system 102.

In general, functionality, features, and concepts described in relation to the examples above and below are employed in the context of the example procedures described in this section. Further, functionality, features, and concepts described in relation to different figures and examples in this document are interchangeable among one another and are not limited to implementation in the context of a particular figure or procedure. Moreover, blocks associated with different representative procedures and corresponding figures herein are applicable together and/or combinable in different ways. Thus, individual functionality, features, and concepts described in relation to different example environments, devices, components, figures, and procedures herein are usable in any suitable combinations and are not limited to the particular combinations represented by the enumerated examples in this description.

### Predictive Recommendation Generation

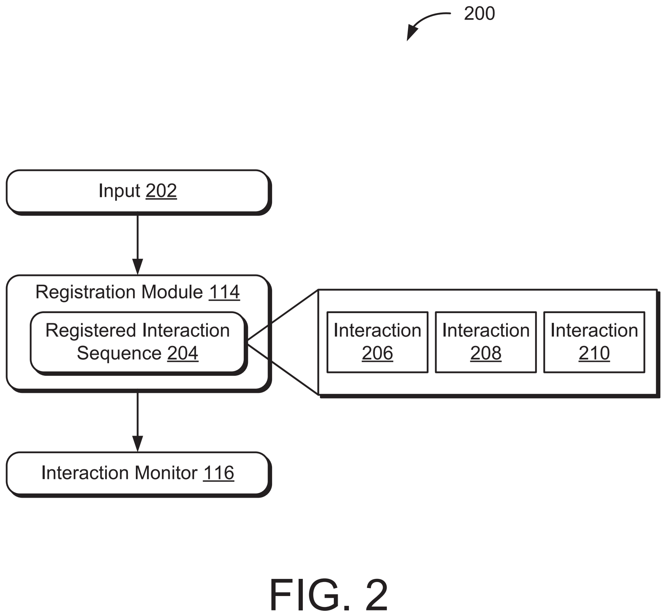

The following discussion describes predictive recommendation generation techniques that are implementable utilizing the described systems and devices. FIG. 2 depicts an example 200 showing operation of the registration module 114 and the interaction monitor 116. In this example, input 202 is communicated to the registration module 114. Based on the input, the registration module 114 generates a registered interaction sequence 204 specifying various interactions that may result from user input to the platform 104. The registered interaction sequence 204 is communicated to the interaction monitor 116. The interaction monitor 116 utilizes the registered interaction sequence 204 during monitoring of interactions between user devices (e.g., computing device 108) and the service provider system 102.

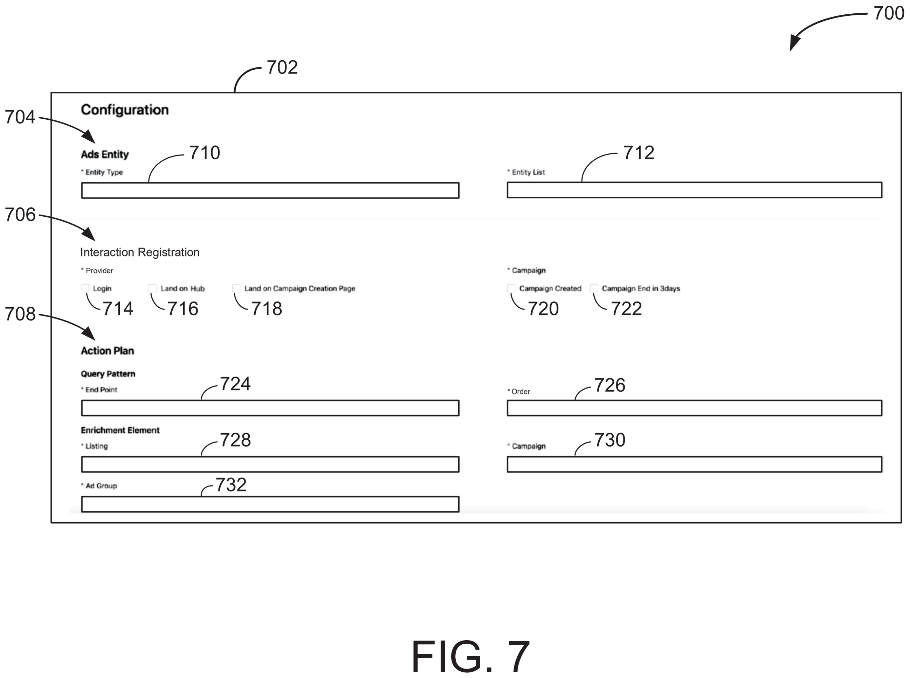

Input 202 may include input to a user interface (e.g., graphical user interface) implemented by the service provider system 102, similar to the example described further below with reference to FIG. 7. For instance, the input 202 may specify one or more particular types or categories of interactions involving users of the platform 104 (e.g., navigation to a user login page, receipt of user login credentials, navigation to an item listing configuration webpage implemented by the platform, navigation to an item listing search webpage implemented by the platform, etc.). The input 202 may be provided by an administrator of the service provider system 102 in some implementations. The administrator refers to a user with sufficient permissions or credentials to alter (e.g., update) parameters of the service provider system 102 such as the registered interaction sequence 204.

The registered interaction sequence 204 specifies various interactions and an order in which the interactions may occur. In the depicted example, the registered interaction sequence 204 includes three interactions as indicated by interaction 206, interaction 208, and interaction 210. It should be appreciated that in some instances, the registered interaction sequence 204 may include a different number of interactions (e.g., two, four, etc.).

The interactions included by the registered interaction sequence 204 are specified via the input 202 as described above. In this example, the interaction 206 is a first interaction in an order of the registered interaction sequence 204, the interaction 208 is a second interaction in the order of the registered interaction sequence 204, and the interaction 210 is a third interaction in the order of the registered interaction sequence 204. Based on this ordering of the interactions, the interaction 208 is specified as occurring after the interaction 206 and before the interaction 210 in the order of the registered interaction sequence 204.

As one non-limiting example, the interaction 206 may correspond to receipt by the service provider system 102 of login credentials input by the computing device 108, the interaction 208 may correspond to accessing (e.g., navigating to), via the computing device 108, an item listing hub webpage implemented by the service provider system 102, and the interaction 210 may correspond to accessing, via the computing device 108, an item listing generation webpage implemented by the service provider system 102. Accessing webpages implemented by the service provider system 102 refers to communicating electronically with the service provider system 102 via a user device, such as the computing device 108, over a network (e.g., network 106) to view the webpages using an application of the user device (e.g., a web browser).

The interaction monitor 116 receives the registered interaction sequence 204 from the registration module 114 and monitors interactions occurring between the platform 104 and a plurality of users of the platform 104 in order to detect whether the interactions of any single user include the interactions described by the registered interaction sequence 204. In implementations, the plurality of users may include all users of the platform 104, a set of users of the platform 104 selected from among all users of the platform 104, users meeting particular criteria, etc.

In some implementations, the interaction monitor 116 detects the interactions in the order specified by the registered interaction sequence 204. In other implementations, the interaction monitor 116 detects the interactions included in the registered interaction sequence 204, even if the interactions do not occur in the order specified by the registered interaction sequence 204. For example, in some situations, additional interactions may occur in durations between the occurrence of the interactions specified by the registered interaction sequence 204. In such situations, the interaction monitor 116 may detect the occurrence of the interactions in the registered interaction sequence 204 in the order specified by the registered interaction sequence 204 by filtering out the additional interactions from consideration.

As one example, additional interactions not included in the registered interaction sequence 204 may occur in a duration between occurrence of the interaction 206 and occurrence of the interaction 208 in a session of a single user, and/or in a duration between occurrence of the interaction 208 and occurrence of the interaction 210 in the session of the single user. Even if the additional interactions are detected, the interaction monitor 116 may identify the interactions included in the registered interaction sequence 204 from among the entire set of interactions and determine whether the identified interactions occurred in the order specified by the registered interaction sequence 204.

In some implementations, however, the interaction monitor 116 may detect whether the interactions specified in the registered interaction sequence 204 have occurred in the specified order consecutively and without additional interactions occurring therebetween. For example, in the above-described situation in which additional interactions occur in durations between the interactions specified by the registered interaction sequence 204, the interaction monitor 116 may determine that the registered interaction sequence 204 has not occurred. However, if the interactions of the registered interaction sequence 204 occur consecutively with no additional interactions therebetween (e.g., the interaction 208 immediately follows the interaction 206 with no other interactions occurring between, and interaction 210 immediately follows the interaction 208 with no other interactions between), the interaction monitor 116 may determine that the registered interaction sequence 204 has occurred. When the interaction monitor 116 determines that the registered interaction sequence 204 has occurred, the interaction monitor 116 may output an indication to the pre-calculation module 112 as described further below.

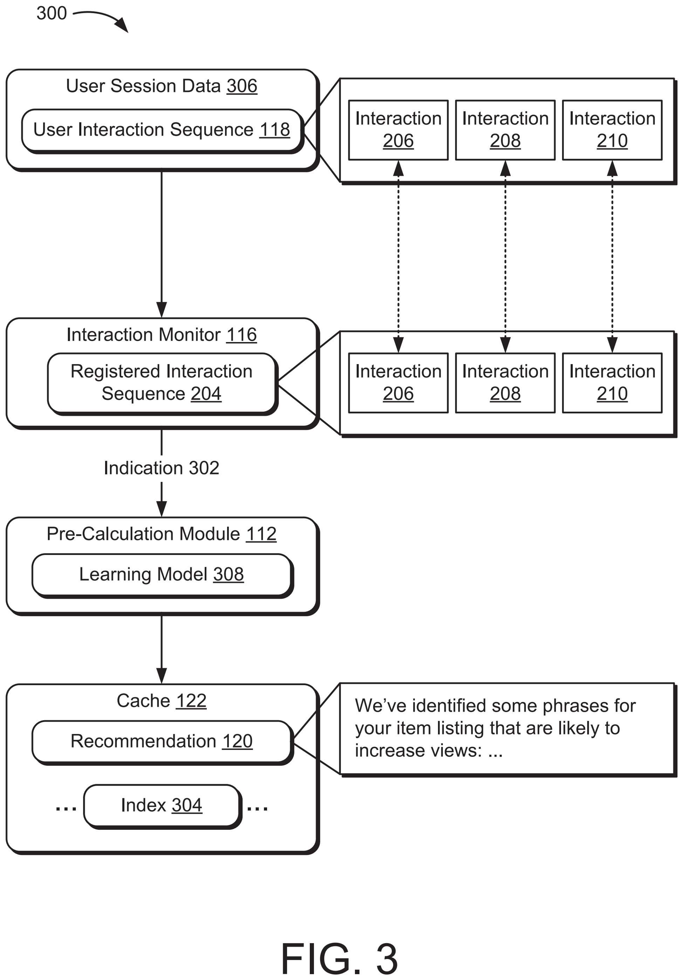

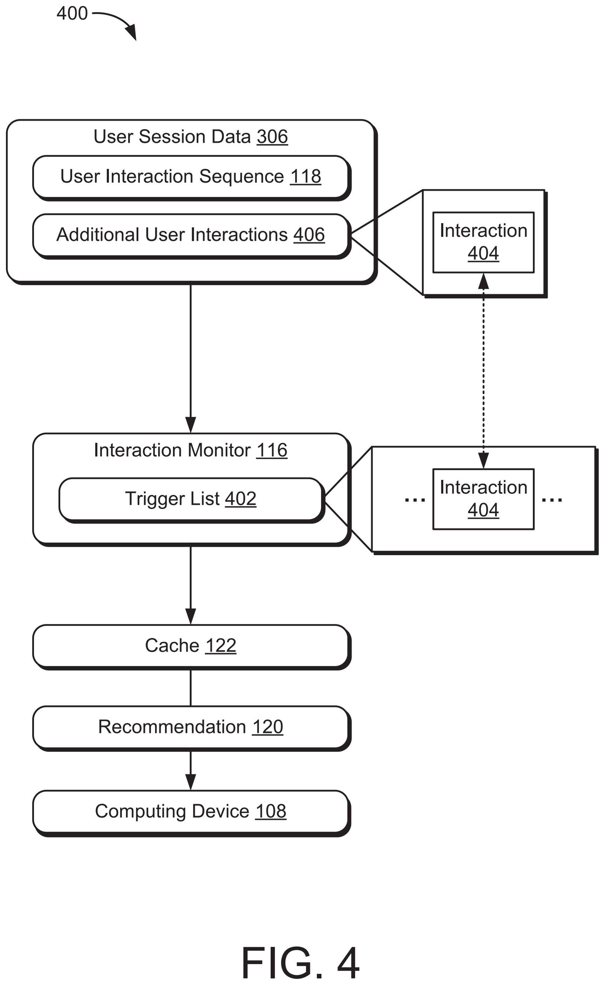

FIG. 3 depicts an example 300 of an implementation showing operation of the pre-calculation module 112 configured to generate recommendations and store the recommendations to the cache 122. In this example, the interaction monitor 116 determines that the interactions described by the user interaction sequence 118 have been performed by a single user of the plurality of users during a single session of the single user on the platform 104. Responsive to determining that the user interaction sequence 118 matches the registered interaction sequence 204 (e.g., determining that the registered interaction sequence 204 has occurred during the session of the user), the interaction monitor 116 outputs an indication 302 to the pre-calculation module 112. The pre-calculation module 112 receives the indication 302 and generates one or more recommendations, such as the recommendation 120. The recommendation 120 is stored in the cache 122 and may be retrieved responsive to detection of a trigger as described further below with reference to FIG. 4. Further, the recommendation 120 is stored in the cache 122 with an index 304 identifying the particular user that performed the user interaction sequence 118. Thus, during conditions in which the recommendation 120 is to be provided to the user as described further below, the index 304 is used to identify the recommendation 120 in the cache 122 for retrieval and output to the device of the user (e.g., computing device 108).

The session of the user on the platform 104 refers to a duration (e.g., an entire duration) between initiating an electronic connection between the user device (e.g., computing device 108) and the service provider system 102 over a network (e.g., network 106) and an end event. The end event may include terminating the connection between the computing device 108 and the service provider system 102. For example, a user may begin a session on the platform 104 by navigating an application of the computing device 108 (e.g., a web browser) to a webpage implemented by the service provider system 102 as part of the platform 104 (e.g., a hub webpage of the platform 104 from which other webpages of the platform 104 may be accessed). The session may continue until the user terminates the connection between the computing device 108 and the service provider system 102 by navigating to a website or webpage that is not part of the platform 104.

In another example, the session may begin with navigation of the application of the computing device 108 to a webpage of the platform 104, and the end event may correspond to the computing device 108 idling for a pre-determined duration (e.g., not interacting with the platform 104). For example, if the service provider system 102 detects that the connection between the computing device 108 and the platform 104 has been idle for longer than the pre-determined duration, the service provider system 102 may consider the idling of the connection as the end event of the session. Idling may include, for example, not providing input to the platform 104 within the pre-determined duration, not navigating to other webpages of the platform 104 within the pre-determined duration, etc. The pre-determined duration may be set by an administrator of the service provider system 102 in some examples. The pre-determined duration may be, for example, five minutes, ten minutes, fifteen minutes, etc.

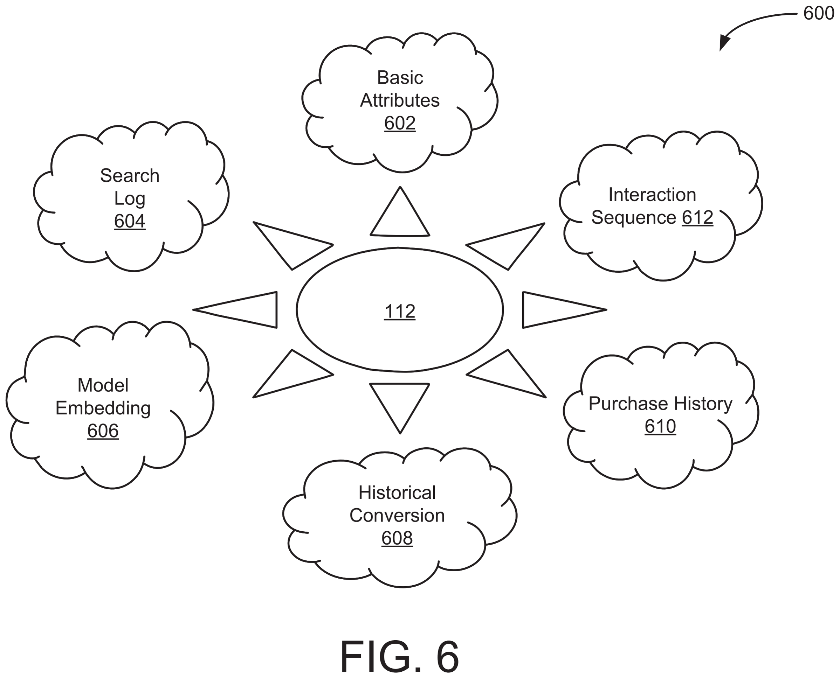

The one or more recommendations that are generated for the single user, such as the recommendation 120, may be based on data describing the single user and/or data describing historical interactions of the single user on the platform 104. For example, the recommendations 120 may be based on data describing attributes of the user (e.g., age, location, time spent on the platform 104, etc.), user order history, user browsing history, the interactions included in the registered interaction sequence 204 that have been detected as performed by the user, item listings associated with the user (e.g., item listings created by the user on the platform 104), etc. Additional examples are described further below with reference to FIG. 6.

In the depicted example, the interaction monitor 116 receives user session data 306 describing various interactions occurring during the session of the user, such as interaction 206, interaction 208, and interaction 210. Although three interactions are depicted in the figure, it should be appreciated that additional or fewer interactions may occur. In implementations, the interaction monitor 116 receives the user session data 306 substantially in real-time, e.g., as the interactions occur. For example, immediately following a time at which interaction 206 occurs, the interaction monitor 116 may receive the user session data 306 indicating the occurrence of the interaction 206.

The interaction monitor 116 compares the interactions included in the user session data 306 to the interactions included in the registered interaction sequence 204. In doing so, the interaction monitor 116 determines whether the user interaction sequence 118 matches the registered interaction sequence 204. In the example shown, the interaction monitor 116 determines that the interactions included in the registered interaction sequence 204 are the same as at least some of the interactions included in the user interaction sequence 118. Additionally, the interaction monitor 116 determines that the order of the interactions in the registered interaction sequence 204 matches the order of the same interactions in the user interaction sequence 118. As a result, the interaction monitor 116 confirms that the interactions included in the registered interaction sequence 204 have been performed during the session of the user (e.g., as user interaction sequence 118) and communicates indication 302 to the pre-calculation module 112. The indication 302 may be, for example, data describing that the registered interaction sequence 204 was detected in the user interaction sequence 118 as described above.

The pre-calculation module 112 receives the indication 302 (e.g., the result of the comparison by the interaction monitor 116) and generates the recommendation 120 to be stored to the cache 122. To do so, the pre-calculation module 112 may employ a learning model 308 to pre-calculate the recommendation 120. Calculation of the recommendation 120 by the learning model 308 may be more computationally intensive than other calculations (e.g., consume more resources such as memory, processor power, etc.). However, by pre-calculating the recommendation 120 responsive to detecting the registered interaction sequence 204 among the user interaction sequence 118 as described herein and storing the recommendation 120 to the cache 122 until a trigger is detected (as described below with reference to FIG. 4), the service provider system 102 is able to provide the 120 to the user device (e.g., computing device 108) with decreased latency.

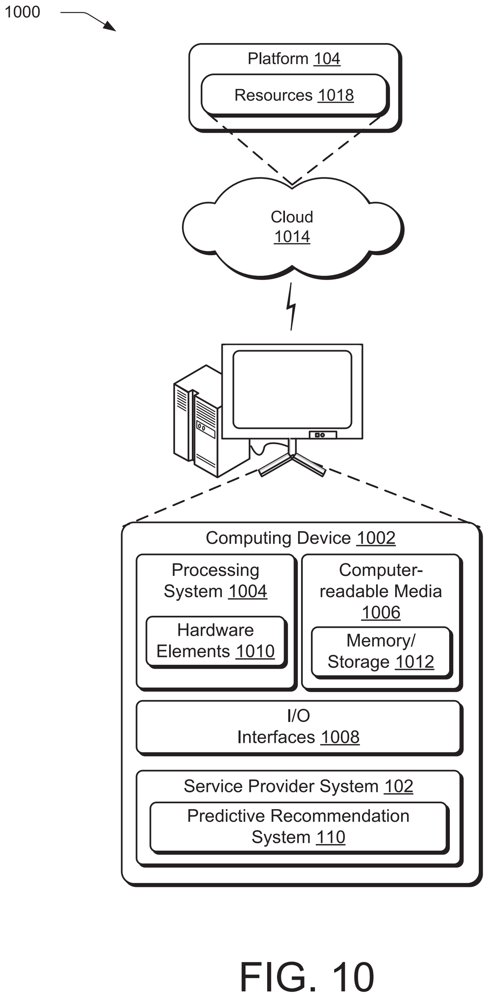

As used herein, the term "machine-learning model" refers to a computer representation that is tunable (e.g., through training and retraining) based on inputs without being actively programmed by a user to approximate unknown functions, automatically and without user intervention. The learning model 308 may implement one or more machine-learning models. The one or more machine-learning models may be multi-modal models utilizing networks and algorithms to learn from, and make predictions on, known data by analyzing training data to learn and relearn to generate outputs that reflect patterns and attributes of the training data. For example, the learning model 308 may employ one or more neural networks, convolutional neural networks (CNNs), long short-term memory (LSTM) neural networks, generative adversarial networks (GANs), decision trees, support vector machines, linear regression, logistic regression, Bayesian networks, random forest learning, dimensionality reduction algorithms, boosting algorithms, deep learning neural networks, etc. for performing the techniques described herein (e.g., generating pre-calculated recommendations associated with users of the platform 104). The learning model 308 may implement one or more large language models (LLMs) capable of interpreting natural language input by employing the networks and algorithms, such as one or more of the example networks and algorithms described above. The learning model 308 executes on one or more processors, such as one or more processors of the processing system described below with reference to FIG. 10.

The one or more machine-learning models implemented by the learning model 308 may be trained on various data to generate recommendations for users. For example, the machine-learning models may be trained on data describing types of item listings frequently viewed by users having particular attributes (e.g., age, gender, location, etc.), data describing words and/or phrases associated with item listings that have high amounts of views and/or high amounts of orders, data describing types of promotions that frequently generate higher interest in item listings, data describing types of promotions that are frequently used by users that author item listings on the platform 104, data describing similarities between item listings such as similar keywords used for similar items, data describing types or categories of products often viewed by particular users, etc. The training of the one or more machine learning models of the learning model 308 using data as described above may increase a relevancy of recommendations provided to users and a likelihood that users utilize promotions offered via the recommendations.

The interaction monitor 116 selects data for the learning model 308 to use for pre-calculating the recommendation 120 based on the registered interaction sequence 204 and the particular user that is to receive the recommendation 120. For example, in some implementations the registered interaction sequence 204 may specify interactions relating to campaign creation, such as the user navigating to a campaign creation webpage implemented by the platform 104. In this situation, the interaction monitor 116 may select data for the learning model 308 to use (e.g., the registered interaction sequence 204) such that the recommendation 120 includes content such as promotions, offers, and/or information related to campaign creation on the platform 104 (e.g., promotions redeemable on the platform 104 such as discounts, product bundles, free items, etc.). As another example, the registered interaction sequence 204 may specify interactions relating to generating item listings, such as the user navigating to an item listing data input webpage implemented by the platform 104. In this situation, the recommendation 120 may include content such as promotions (e.g., promotions redeemable on the platform 104 as described above), offers, and/or information relating to item listings on the platform 104 (e.g., keywords to be used for particular item listings to increase views, recommendations for particular images to be included in item listings, etc.). The above examples are non-limiting and other examples are possible.

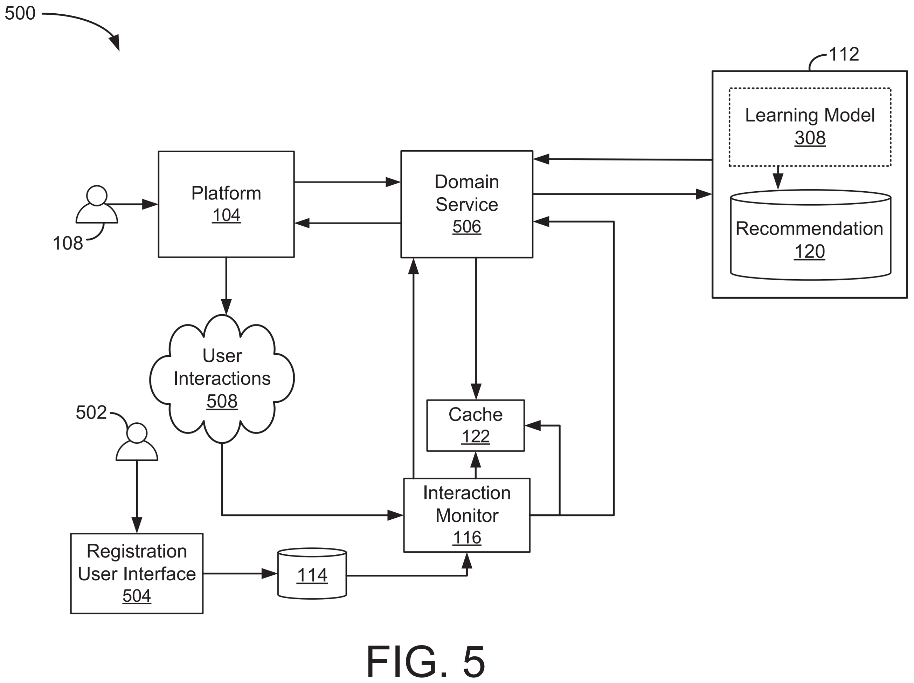

The cache 122 is configured to store the pre-calculated recommendation 120 indexed to an entity level (e.g., individual user account level) via index 304. The entity level may be specified by a domain service as described further below with reference to FIG. 5.

Although in the described implementations the pre-calculation module 112 is employed to pre-calculate recommendations for users, in some implementations the pre-calculation module 112 may be employed to pre-calculate other items or results responsive to detecting that the interactions included in the registered interaction sequence 204 are performed in the user interaction sequence 118 in the order specified by the registered interaction sequence 204. For example, the pre-calculation module 112 may be employed to pre-calculate item listing descriptions, account order summaries or statements, search results, etc. and store the pre-calculated data to the cache 122, with the pre-calculated data to be retrieved responsive to a trigger as described further below. These examples are non-limiting, and other examples are possible.

FIG. 4 depicts an example 400 of an implementation showing operation of the interaction monitor 116 to detect a trigger and provide the recommendation 120 responsive to the trigger. In the depicted example, the recommendation 120 has been pre-calculated by the pre-calculation module 112 and stored to the cache 122 as described above. The example operation shown occurs after the recommendation 120 has been stored to the cache 122 responsive to determining via the interaction monitor 116 that the user interaction sequence 118 includes the interactions specified by the registered interaction sequence 204 as described above. In particular, in the example, the recommendation 120 is pre-calculated and stored to the cache 122 prior to employing the interaction monitor 116 to detect whether a trigger has occurred.

In the example, the interaction monitor 116 continues to monitor the user session data 306 once the recommendation 120 has been stored to the cache 122 to determine whether a trigger from a trigger list 402 has occurred. The trigger list 402 is a list of one or more particular interactions referred to herein as triggers that, when detected, cause the interaction monitor 116 to communicate electronically with the cache 122 to provide the recommendation 120 to the user device (e.g., computing device 108). The trigger list 402 may be specified by the input 202 to the registration module 114 in some implementations and may be communicated to the interaction monitor 116 by the registration module 114. In some implementations, the trigger list 402 may be pre-determined for the service provider system 102 (e.g., determined separately from the input 202). The interactions specified in the trigger list 402 may be different than the interactions specified by the registered interaction sequence 204.

The interactions in the trigger list 402 may include, for example, interactions between the computing device 108 and the platform 104 such as user input provided via the computing device 108 to generate an item listing on the platform 104, confirmation provided via the computing device 108 to create a campaign on the platform 104, user input provided via the computing device 108 to request the recommendation 120 from the platform 104, etc.

The interaction monitor 116 detects interaction 404 from among one or more additional user interactions 406 that occur after the user interaction sequence 118 has occurred. The interaction monitor 116 compares the interaction 404 with the interactions specified in the trigger list 402 and determines that the interaction 404 is included in the trigger list 402. Responsive to the detecting that the interaction 404 (e.g., the trigger) has occurred, the interaction monitor 116 communicates electronically with the cache 122 to cause the recommendation 120 to be retrieved from the cache 122 and provided to the computing device 108.

Providing the recommendation 120 to the computing device 108 may include displaying the recommendation 120 at the computing device 108 via the platform 104 (e.g., via a webpage implemented by the platform 104), communicating the recommendation 120 to the user via email, storing the recommendation 120 to a recommendations section of a profile of the user on the platform 104, etc.

FIG. 5 is an illustration of another environment 500 in an example implementation that is operable to employ predictive recommendation generation as described herein. In this example, a computing device 502 is provided administrator access to interface with the registration module 114 of the service provider system 102 via a registration user interface 504. The registration user interface 504 may be a graphical user interface implemented by the registration module 114 for input and adjustment of one or more registered interaction sequences. The registered interaction sequence 204 is described by way of example. The registration user interface 504 may be implemented as a webpage by the service provider system 102, for example. In this scenario, the registered interaction sequence 204 is input to the registration module 114 by way of interaction of the computing device 502 with the registration user interface 504. The registration module 114 communicates the registered interaction sequence 204 to the interaction monitor 116, and the interaction monitor 116 is employed by the service provider system 102 to detect whether the interactions specified by the registered interaction sequence 204 are performed during a session of a user.

Computing device 108 electronically connects to the service provider system 102 over a network such as the network 106 and interacts with the platform implemented by the service provider system 102 via the platform 104. In doing so, the computing device 108 starts a session on the platform. The service provider system 102 employs a domain service 506 to retrieve content and provide content to the computing device 108 via the platform 104. The domain service 506 is also operable to communicate electronically with various components of the service provider system 102 to retrieve data, communicate data from one component to another, and support operations performed by the components.

As the computing device 108 interacts with the platform via the platform 104, the interactions between the computing device 108 and the platform are communicated to the interaction monitor 116 as user interactions 508. The user interactions 508 include interactions such as navigation of the computing device 108 to webpages implemented by the platform, input of data to the platform via the platform 104, etc.

The interaction monitor 116 compares the registered interaction sequence 204 with the user interactions 508 and determines whether the specific interactions included in the registered interaction sequence 204 have occurred in the user interactions 508 in the order specified by the registered interaction sequence 204. Responsive to determining that the interactions in the registered interaction sequence 204 have occurred in the user interactions 508 in the order specified by the registered interaction sequence 204, the interaction monitor 116 communicates electronically with the domain service 506 to cause the domain service 506 to communicate electronically with the pre-calculation module 112 to generate the recommendation 120 using the learning model 308. The pre-calculation module 112 communicates the recommendation 120 to the domain service 506, and the domain service 506 communicates the recommendation 120 to the cache 122 for storage of the recommendation 120 in the cache 122.

The interaction monitor 116 continues to monitor the interactions between the computing device 108 and the platform during the session of the user. Responsive to determining that a trigger has occurred as described above with reference to FIG. 4, the interaction monitor 116 communicates with the domain service 506 to cause the domain service 506 to retrieve the recommendation 120 from the cache 122. The domain service 506 communicates the retrieved recommendation 120 to the computing device 108 via the platform 104.

In the depicted example, the domain service 506 is employed to retrieve the pre-calculated recommendation 120 from the cache 122 in response to the trigger. The trigger may include, for example, a request from the user for the recommendation 120. The retrieved recommendation 120 is output by the domain service to the user device (e.g., the computing device 108). The domain service 506 specifies the entity level at which the pre-calculated recommendation 120 is indexed, e.g., via index 304.

FIG. 6 is an illustration of an example 600 showing various data sources that may be used for predictive recommendation generation. The data sources depicted may include data that is stored by data storage 124 in some instances (e.g., the data sources may refer to portions of the data storage 124 that store the particular types of data associated with the data sources). The pre-calculation module 112 may acquire data from one or more of the data sources to be used for generating the recommendation 120.

In the example, the data sources include a basic attributes data source 602, a search log data source 604, a model embedding data source 606, a historical conversion data source 608, a purchase history data source 610, and an interaction sequence data source 612. The basic attributes data source 602 may include data describing attributes associated with a user for which the recommendation 120 is generated such as username, location, age, gender, etc. The search log data source 604 may include data describing a search history of the user on the platform (e.g., searches for item listings during one or more sessions). The model embedding data source 606 may include data used for training of the machine-learning model 308. The historical conversion data source 608 may include data describing historical interactions between the user and the platform that have resulted in confirmed orders for items described by item listings on the platform. The purchase history data source 610 may include data describing orders completed by the user for items described by item listings on the platform. The interaction sequence data source 612 may describe interactions that have occurred between the user and the platform (e.g., between the device of the user, such as computing device 108, and the platform), as well as an order of the interactions.

In implementations, the recommendation 120 includes one or more advertisements and/or promotions that are generated based on the data from the data sources for the user. For example, the advertisements or promotions may be directed toward items in item listings that are related to the item listings described by the historical conversion data source 608. As another example, the advertisements or promotions may be directed toward products associated with the platform (e.g., services) that may increase views and/or visibility of item listings associated with the user (e.g., item listings published by the platform using input provided by the user).

FIG. 7 is an illustration of an example 700 of a graphical user interface 702 employed for receiving input specifying the registered interaction sequence 204 for predictive recommendation generation as described herein. The graphical user interface 702 includes various fields configured to receive data input by an administrator of the service provider system 102 (e.g., via computing device 502) for configuration of the registered interaction sequence 204. In the example shown, the graphical user interface 702 includes an ads entity section 704, an interaction registration section 706, and an action plan section 708. The ads entity section 704 includes an entity type field 710 and an entity list field 712 used to specify entities and/or a type of entity (e.g., a user of the computing device 108 having a respective user account on the platform implemented by the service provider system 102) to receive recommendations generated by the pre-calculation module 112.

The interaction registration section 706 includes various selectors used to specify interactions to be included in the registered interaction sequence 204. For example, a first selector 714 may be selected to include user login interactions in the registered interaction sequence 204, a second selector 716 may be selected to include a user accessing a hub webpage in the registered interaction sequence 204, a third selector 718 may be selected to include a user accessing a campaign creation webpage in the registered interaction sequence 204, a fourth selector 720 may be selected to include a user creating a campaign in the registered interaction sequence 204, and a fifth selector 722 may be selected to include selection of an end date of a campaign in the registered interaction sequence 204. A campaign may be employed by the platform to support promotion of particular item listings associated with a user. For example, a campaign may be created to included multiple item listings associated with a single user, and the user may customize parameters of the campaign to increase a promotion of one or more of the multiple item listings on the platform.

The action plan section 708 includes various fields used to input or select an order of the interactions included in the registered interaction sequence 204 and a content of the recommendations generated by the pre-calculation module 112. For example, the action plan section 708 includes a query pattern end point field 724 used to specify a trigger that causes one or more recommendations generated by the pre-calculation module 112 to be retrieved from the cache 122 and provided to the user device, and an order field 726 used to specify the order of the interactions included in the registered interaction sequence 204. The action plan section 708 further includes a listing enrichment field 728 used to specify content relating to item listings that may be included in the recommendations generated by the pre-calculation module 112, a campaign enrichment field 730 used to specify content relating to campaigns that may be included in the recommendations generated by the pre-calculation module 112, and an ad group field 732 used to specify categories of advertisements that may be included in the recommendations generated by the pre-calculation module 112.

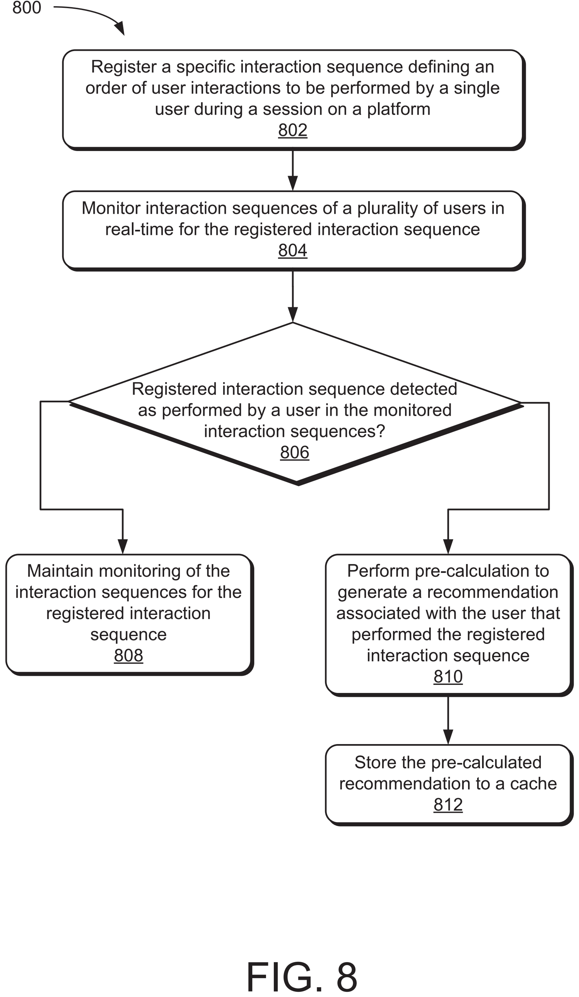

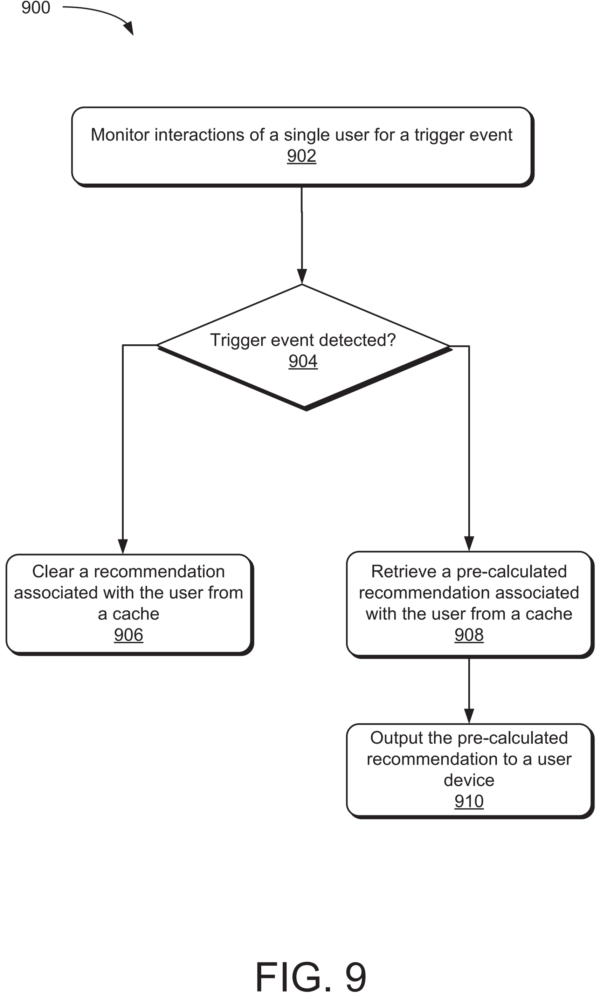

FIG. 8 shows a flow diagram depicting an algorithm as a step-by-step procedure 800 in an example implementation of operations performable for accomplishing a result of predictive recommendation generation. Aspects of the procedure are implemented in hardware, firmware, software, or a combination thereof. The procedures are shown as sets of blocks that specify operations performable by hardware and are not necessarily limited to the orders shown for performing the operations by the respective blocks. Blocks of the procedures, for instance, specify operations programmable by hardware (e.g., processor, microprocessor, controller, firmware) as instructions thereby creating a special purpose machine for carrying out an algorithm as illustrated by the flow diagram. As a result, the instructions are storable on a computer-readable storage medium that causes the hardware to perform the algorithm. In some instances, the procedure 800 includes a procedure 900 for managing a recommendation pre-calculated via predictive recommendation generation as shown by the diagram of FIG. 9, with procedure 900 performed as a portion of procedure 800.

A specific interaction sequence defining an order of user interactions to be performed by a single user during a session on a platform is registered (block 802). By way of example, the specific interaction sequence is the registered interaction sequence 204 defined via the registration module 114, and the platform is platform 104.

Interaction sequences of a plurality of users are monitored in real-time for the registered interaction sequence (block 804). By way of example, various users perform various interactions with the platform 104, such as interactions included in the user interaction sequence 118. The interaction monitor 116 monitors the interactions of the users with the platform 104 in real-time.

A determination is made of whether the registered interaction sequence is detected as performed by a user in the monitored interaction sequences (block 806). By way of example, the interaction monitor 116 determines whether a user of the plurality of users has performed the interactions included in the registered interaction sequence 204 in the order specified by the registered interaction sequence 204, e.g., as the user interaction sequence 118.

If the registered interaction sequence is not detected in the monitored interaction sequences, the monitoring of the interaction sequences for the registered interaction sequence is maintained (block 808). By way of example, the interaction monitor 116 continues to monitor the interactions performed between the plurality of users and the platform 104.

However, if the registered interaction sequence is detected in the monitored interaction sequences, pre-calculation is performed to generate a recommendation associated with the user that performed the registered interaction sequence (block 810). By way of example, responsive to determining that a user has performed the interactions included in the registered interaction sequence 204, the pre-calculation module 112 generates the recommendation 120 for that particular user.

The pre-calculated recommendation is stored to a cache (block 812). By way of example, the recommendation 120 generated for the particular user is stored to the cache 122.

Referring to FIG. 9, a flow diagram is shown depicting a procedure 900 in an example implementation which includes a recommendation pre-calculated via predictive recommendation generation. Aspects of the procedure are implemented in hardware, firmware, software, or a combination thereof. The procedures are shown as sets of blocks that specify operations performable by hardware and are not necessarily limited to the orders shown for performing the operations by the respective blocks. Blocks of the procedures, for instance, specify operations programmable by hardware (e.g., processor, microprocessor, controller, firmware) as instructions thereby creating a special purpose machine for carrying out an algorithm as illustrated by the flow diagram. As a result, the instructions are storable on a computer-readable storage medium that causes the hardware to perform the algorithm.

Interactions of a single user are monitored for a trigger (block 902). By way of example, the trigger may be an interaction included in the trigger list 402 and the single user may be the user that performed the interactions included in the registered interaction sequence 204 as described above.

A determination is made as to whether a trigger is detected (block 904). By way of example, the interaction monitor 116 monitors the interactions performed between the user device (e.g., computing device 108) and the platform 104 for the trigger.

If a trigger is not detected, the recommendation associated with the user is cleared (e.g., discarded) from a cache (block 906). By way of example, the recommendation 120 may be removed from the cache 122 if a pre-determined amount of time elapses following the generation of the recommendation 120. For example, if the trigger is not detected within an amount of time such as five minutes, ten minutes, fifteen minutes, etc. following stored of the recommendation 120 to the cache cache 122, the recommendation may be cleared (e.g., deleted) from the cache 122 in order to conserve cache storage allocation. This may reduce a likelihood of filling of the cache 122 to capacity, which may increase performance of the service provider system 102 and ensure sufficient cache storage space is available for subsequent recommendations. The pre-determined amount of time may be set by an administrator of the service provider system 102, in some implementations.

However, if a trigger is detected, the pre-calculated recommendation associated with the user is retrieved from the cache (block 908). By way of example, the domain service 506 references the index 304 to retrieve the recommendation 120 associated with the particular user, and the recommendation 120 may be provided to the user device (e.g., computing device 108) via communication of the recommendation 120 to the platform 104 by the domain service 506.

The pre-calculated recommendation is output to a user device (block 910). By way of example, the recommendation 120 is displayed to the user at the user device via the platform 104.

### Example System and Device

Referring to FIG. 10, an example system 1000 is depicted that includes an example computing device that is representative of one or more computing systems and/or devices that are usable to implement the various techniques described herein. This is illustrated through inclusion of the service provider system 102 including predictive recommendation system 110. Computing device 1002 includes, for example, a server of service provider system 102, a device associated with a client (e.g., a client device), an on-chip system, and/or any other suitable computing device or computing system.

The example computing device 1002 as illustrated includes a processing system 1004, one or more computer-readable media 1006, and one or more input/output interfaces 1008 (I/O interfaces) that are communicatively coupled, one to another. Although not shown, the computing device 1002 further includes a system bus or other data and command transfer system that couples the various components, one to another. For example, a system bus includes any one or combination of different bus structures, such as a memory bus or memory controller, a peripheral bus, a universal serial bus, and/or a processor or local bus that utilizes any of a variety of bus architectures. A variety of other examples are also contemplated, such as control and data lines.

The processing system 1004 is representative of functionality to perform one or more operations using hardware. Accordingly, the processing system 1004 is illustrated as including hardware elements 1010 that are configured as processors, functional blocks, and so forth. This includes example implementations in hardware as a system specific integrated circuit or other logic device formed using one or more semiconductors. The hardware elements 1010 are not limited by the materials from which they are formed or the processing mechanisms employed therein. For example, processors are comprised of semiconductor(s) and/or transistors (e.g., electronic integrated circuits (ICs)). In such a context, processor-executable instructions are, for example, electronically-executable instructions.

The computer-readable media 1006 is illustrated as including memory/storage 1012. The memory/storage 1012 represents memory/storage capacity associated with one or more computer-readable media. In one example, the memory/storage 1012 includes volatile media (such as random access memory (RAM)) and/or nonvolatile media (such as read only memory (ROM), Flash memory, optical disks, magnetic disks, and so forth). In another example, the memory/storage 1012 includes fixed media (e.g., RAM, ROM, a fixed hard drive, and so on) as well as removable media (e.g., Flash memory, a removable hard drive, an optical disc, and so forth). The computer-readable media 1006 is configurable in a variety of other ways as further described below.

Input/output interface(s) 1008 are representative of functionality to allow user input to enter commands and information to computing device 1002, and also allow information to be presented and/or other components or devices using various input/output devices. Examples of input devices include a keyboard, a cursor control device (e.g., a mouse), a microphone, a scanner, touch functionality (e.g., capacitive or other sensors that are configured to detect physical touch), a camera (e.g., which employs visible or non-visible wavelengths such as infrared frequencies to recognize movement as gestures that do not involve touch), and so forth. Examples of output devices include a display device (e.g., a monitor or projector), speakers, a printer, a network card, tactile-response device, and so forth. Thus, the computing device 1002 is configurable in a variety of ways as further described below to support user interaction.

Various techniques are described herein in the general context of software, hardware elements, or program modules. Generally, such modules include routines, programs, objects, elements, components, data structures, and so forth that perform particular tasks or implement particular abstract data types. The terms "module," "functionality," and "component" as used herein generally represent software, firmware, hardware, or a combination thereof. The features of the techniques described herein are platform-independent, meaning that the techniques are implementable on a variety of commercial computing platforms having a variety of processors.

Implementations of the described modules and techniques are storable on or transmitted across some form of computer-readable media. For example, the computer-readable media includes a variety of media that is accessible to the computing device 1002. By way of example, and not limitation, computer-readable media includes "computer-readable storage media" and "computer-readable signal media."

"Computer-readable storage media" refers to media and/or devices that enable persistent and/or non-transitory storage of information in contrast to mere signal transmission, carrier waves, or signals per se. Thus, computer-readable storage media refers to non-signal bearing media. The one-or-more computer-readable storage media includes hardware such as volatile and non-volatile, removable and non-removable media and/or storage devices implemented in a method or technology suitable for storage of information such as computer readable instructions, data structures, program modules, logic elements/circuits, or other data. Examples of computer-readable storage media include, but are not limited to, RAM, ROM, EEPROM, flash memory or other memory technology, CD-ROM, digital versatile disks (DVD) or other optical storage, hard disks, magnetic cassettes, magnetic tape, magnetic disk storage or other magnetic storage devices, or other storage device, tangible media, or article of manufacture suitable to store the desired information and which are accessible to a computer.

"Computer-readable signal media" refers to a signal-bearing medium that is configured to transmit instructions to the hardware of the computing device 1002, such as via a network. Signal media typically embodies computer readable instructions, data structures, program modules, or other data in a modulated data signal, such as carrier waves, data signals, or other transport mechanism. Signal media also include any information delivery media. The term "modulated data signal" means a signal that has one or more of its characteristics set or changed in such a manner as to encode information in the signal. By way of example, and not limitation, communication media include wired media such as a wired network or direct-wired connection, and wireless media such as acoustic, RF, infrared, and other wireless media.

As previously described, hardware elements 1010 and computer-readable media 1006 are representative of modules, programmable device logic and/or fixed device logic implemented in a hardware form that is employable in some embodiments to implement at least some aspects of the techniques described herein, such as to perform one or more instructions. Hardware includes components of an integrated circuit or on-chip system, a system-specific integrated circuit (ASIC), a field-programmable gate array (FPGA), a complex programmable logic device (CPLD), and other implementations in silicon or other hardware. In this context, hardware operates as a computing device that performs program tasks defined by instructions and/or logic embodied by the hardware as well as a hardware utilized to store instructions thereon for execution, e.g., the computer-readable storage media described previously.

Combinations of the foregoing are also employable to implement various techniques described herein. Accordingly, software, hardware, or executable modules are implementable as one or more instructions and/or logic embodied on some form of computer-readable storage media and/or by one or more hardware elements 1010. For example, the computing device 1002 is configured to implement particular instructions and/or functions corresponding to the software and/or hardware modules. Accordingly, implementation of a module that is executable by the computing device 1002 as software is achieved at least partially in hardware, e.g., through use of computer-readable storage media and/or hardware elements 1010 of the processing system 1004. The instructions and/or functions are executable/operable by one or more articles of manufacture (for example, one or more computing devices 1002 and/or processing systems 1004) to implement techniques, modules, and examples described herein.

The techniques described herein are supportable by various configurations of the computing device 1002 and are not limited to the specific examples of the techniques described herein. This functionality is also implementable entirely or partially through use of a distributed system, such as over a "cloud" 1014 as described below.

The cloud 1014 includes and/or is representative of the platform 104 for resources 1018. The platform 104 abstracts underlying functionality of hardware (e.g., servers) and software resources of the cloud 1014. For example, the resources 1018 include systems and/or data that are utilized while computer processing is executed on servers that are remote from the computing device 1002. In some examples, the resources 1018 also include services provided over the Internet and/or through a subscriber network, such as a cellular or Wi-Fi network.

The platform 104 abstracts the resources 1018 and functions to connect the computing device 1002 with other computing devices. In some examples, the platform 104 also serves to abstract scaling of resources to provide a corresponding level of scale to encountered demand for the resources that are implemented via the platform. Accordingly, in an interconnected device embodiment, implementation of functionality described herein is distributable throughout the system 1000. For example, the functionality is implementable in part on the computing device 1002 as well as via the platform 104 that abstracts the functionality of the cloud 1014.

### Conclusion

Although the systems and techniques have been described in language specific to structural features and/or methodological acts, it is to be understood that the systems and techniques defined in the appended claims are not necessarily limited to the specific features or acts described. Rather, the specific features and acts are disclosed as example forms of implementing the claimed subject matter. Further, various different examples are described and it is to be appreciated that each described example is implementable independently or in connection with one or more other described examples.

## Claims

1. A system, comprising:
a registration component to register a specific interaction sequence defining an order of user interactions to be performed by a single user during a session on a platform, the specific interaction sequence predicted to proceed to a request for a recommendation for the single user;
an interaction monitor to:
monitor, in real-time, interaction sequences of a plurality of users; and
in response to detecting the specific interaction sequence for a user of the plurality of users, performing, in real-time, pre-calculation of the recommendation for the single user; and
a cache to store the pre-calculated recommendation.

2. The system of claim 1, further comprising a domain service to:
retrieve the pre-calculated recommendation from the cache in response to the single user requesting the recommendation; and
output the pre-calculated recommendation.

3. The system of claim 2, wherein the cache is configured to store the recommendation indexed to an entity level specified by the domain service.

4. The system of any one of the preceding claims, further comprising a machine-learning model to pre-calculate the recommendation;
wherein the interaction monitor may select data for the machine-learning model to use for pre-calculating the recommendation based on the single user and the specific interaction sequence.

5. The system of any one of the preceding claims, wherein the platform supports a plurality of item listings, and a content of the recommendation is determined based on one or more of the item listings associated with the single user;
wherein the content of the recommendation may include one or more promotions redeemable on the platform.

6. A method implemented by a computing device, comprising:
receiving input specifying a registered interaction sequence, the registered interaction sequence defining interactions performable in a specified order during a user session on a platform;
monitoring, in real-time, interaction sequences performed by users of the platform;
responsive to determining that one of the interaction sequences performed by one of the users includes each of the interactions of the registered interaction sequence in the specified order, immediately generating a recommendation associated with the user and storing the recommendation to a cache.

7. The method of claim 6, further comprising:
responsive to detecting that a trigger has occurred, retrieving the recommendation from the cache and outputting the recommendation to the user
wherein storing the recommendation to the cache may include associating the recommendation in the cache with the user via an index in the cache.

8. The method of claim 6 or 7, wherein generating the recommendation associated with the user is performed via a machine-learning model;
wherein the method may further comprise selecting data for the machine-learning model to use for generating the recommendation associated with the user based on data describing attributes of the user and the registered interaction sequence.

9. The method of any one of claims 6 to 8, further comprising:
monitoring, in real-time, interactions of the user with the platform;
detecting a trigger from the interactions; and
responsive to detecting the trigger, retrieving the recommendation from the cache and outputting the recommendation to a user device via the platform.

10. The method of any one of claims 6 to 9, further comprising:
monitoring, in real-time, interactions of the user with the platform;
determining whether a trigger is present in the monitored interactions within a duration; and
responsive to determining that the trigger is not present in the monitored interactions within the duration, discarding the recommendation from the cache.

11. One or more transitory or non-transitory computer-readable storage media storing instructions thereon which, when executed by one or more computing devices, cause the one or more computing devices to perform operations comprising:
receiving input to register a specific interaction sequence defining an order of user interactions to be performed by a single user during a session on a platform;
monitoring, in real-time, interaction sequences of a plurality of users;
responsive to detecting the specific interaction sequence for a user of the plurality of users, performing, in real-time, pre-calculation of a recommendation for the user;
storing the pre-calculated recommendation to a cache.

12. The one or more transitory or non-transitory computer-readable storage media of claim 11, wherein the instructions further comprise:
retrieving the pre-calculated recommendation from the cache in response to the single user requesting the recommendation; and
outputting the pre-calculated recommendation.

13. The one or more transitory or non-transitory computer-readable storage media of claim 11 or 12, wherein the instructions further comprise associating the recommendation in the cache with the single user via an index of the cache.

14. The one or more transitory or non-transitory computer-readable storage media of any one of claims 11 to 13, wherein the instructions further comprise performing the pre-calculation of the recommendation for the user using a machine-learning model;
wherein the instructions may further comprise selecting data for the machine-learning model to use for pre-calculating the recommendation based on the single user and the specific interaction sequence.

15. The one or more transitory or non-transitory computer-readable storage media of any one of claims 11 to 14, wherein the instructions further comprise determining a content of the recommendation based on the platform.
